# DEMANDE DE BREVET EUROPEEN

(11) **EP 0 540 390 A1**
(43) Date de publication de la demande: **05.05.1993**
(21) Numéro de dépôt: 92402829.3
(22) Date de dépôt: 16.10.1992
(51) Int. Cl.: C09D 5/22, C09K 11/00, C09K 11/02

(54) **Matériau comportant des pigments notamment luminescents, et son procédé d'obtention**

(30) Priorité: 29.10.1991 FR 9113318
(71) Demandeur: Couverchel, Daniel Georges, F-54220 Malzeville (FR)
(72) Inventeur: Couverchel, Daniel Georges, F-54220 Malzeville (FR)

(57) **Abrégé**

Le revêtement selon l'invention comporte des pigments, notamment luminescents. Il est constitué d'au moins un liant (2), de billes (6) en verre par exemple, et de pigments (3) de telle façon que les billes (6) soient jointives à l'intérieur du revêtement et réparties sensiblement sur toute son épaisseur, les pigments (3) étant contenus dans le liant (2) entre les billes (6) de manière à être protégés mécaniquement et répartis de façon homogène à l'intérieur du revêtement.

## Description

La présente invention concerne un matériau comportant des pigments, notamment luminescents, et son procédé d'obtention.

Elle s'applique par exemple à des revêtements de surface devant rester visibles après disparition de tout éclairage, artificiel ou naturel, pour des raisons de sécurité ou d'esthétique, ces revêtements étant par ailleurs soumis à de fortes contraintes mécaniques comme dans le cas notamment de revêtements de sol notamment. Plus généralement elle s'applique à tous revêtements dont il est nécessaire de garantir une longue durée de vie tout en gardant ses propriétés, luminescentes par exemple, ainsi que ses qualités esthétiques, et cela, quel que soit l'application ou l'environnement.

Les revêtements luminescents notamment photoluminescents déjà connus sont très peu résistants aux contraintes mécaniques. En effet ces produits sont généralement constitués d'un liant solidifié contenant des pigments photoluminescents. Or ceux-ci sont très fragiles et à la moindre contrainte mécanique telle qu'un léger écrasement par exemple, ils perdent leur propriété luminescente. Les liants, généralement à base de polymères, amortissent mal ces contraintes. Cet inconvénient empêche l'utilisation de ces produits pour des revêtements de sol par exemple.

Un autre inconvénient propre à ces produits photoluminescents connus est leur médiocre qualité esthétique due au fait que les pigments photoluminescents ne se répartissent pas de façon homogène à l'intérieur du liant. De plus, la densité relative des pigments par rapport au liant fait que lors de la pose du revêtement notamment, alors que le liant est encore fluide, ceux-ci s'agglutinent vers le fond avant que le produit ait eu le temps de durcir. Un moyen connu pour rendre le revêtement homogène et améliorer ainsi ses qualités esthétiques, est de saturer le liant de pigments photoluminescents. Cependant cette méthode est inexploitable pour certaines applications car elle nécessite une très grande quantité de pigments photoluminescents qui sont très coûteux. De plus, si cette méthode résout partiellement les problèmes d'homogénéité et de répartition dans le liant, elle élude le problème du manque de résistance mécanique de ces produits. Enfin, ces derniers s'enflamment facilement à cause de la grande quantité de liant qu'ils contiennent, le liant est en effet à base de matière organique, ce qui rend l'utilisation de ces revêtements dangereux dans des lieux publics ou susceptibles d'être soumis à des incendies.

Le but de l'invention est de pallier les inconvénients précités.

A cet effet l'invention a pour objet un matériau comportant des pigments, ayant une épaisseur donnée et étant constitué au moins d'un liant, de billes et de pigments, caractérisé en ce que les billes sont jointives à l'intérieur du revêtement et réparties sensiblement sur toute son épaisseur, les pigments étant contenus dans le liant entre les billes.

L'invention a également pour objet un procédé d'obtention du revêtement précité.

L'invention a pour principaux avantages qu'elle permet d'obtenir des produits luminescents offrant une grande résistance aux contraintes mécaniques, ayant de remarquables qualités esthétiques, étant très peu inflammables et ayant une longue durée de vie, enfin qu'elle permet d'obtenir ces produits de façon simple et peu coûteuse.

D'autres caractéristiques et avantages de l'invention apparaîtront à l'aide de la description qui suit faite en regard des dessins annexés qui représentent :
- la figure 1a, une vue en coupe d'un revêtement comportant des pigments ;
- la figure 1b, une vue en coupe d'un revêtement dont le liant est saturé de pigments ;
- la figure 2a, une vue en coupe d'un revêtement possible selon l'invention ;
- la figure 2b, des pigments disposés entre des billes de verre selon l'invention ;
- les figures 3a et 3b, des illustrations de charges supplémentaires contenues dans des revêtements selon l'invention ;
- la figure 4, une illustration d'un procédé d'obtention possible d'un produit de revêtement selon l'invention.

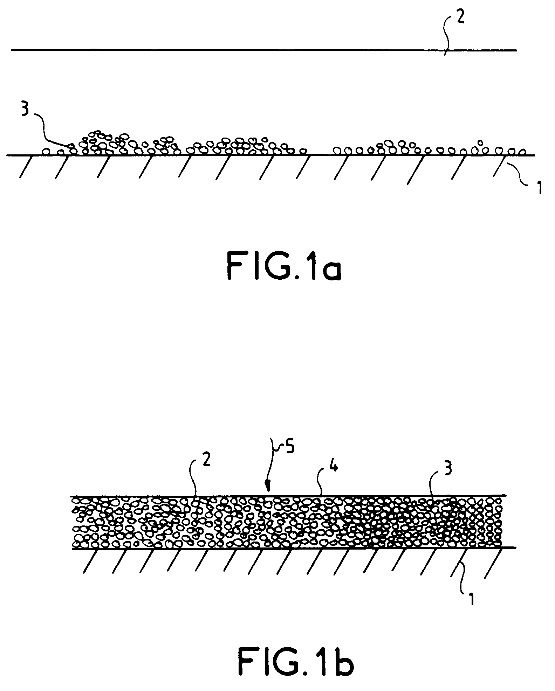

La figure 1a illustre une vue en coupe d'un revêtement comportant des pigments réalisé selon l'art antérieur, elle présente un support 1 repéré par des hachures, sur lequel a été déposé une couche de liant 2 contenant des pigments 3. Le liant 2 est constitué d'une matière de base fluide, une résine translucide par exemple et d'un durcisseur destiné à solidifier le liant après la pose. La nature de ces deux éléments utilisés dépend de leurs compositions respectives et de la nature des pigments. Avant la pose du produit, les pigments 3 sont incorporés dans le liant 2 et répartis de façon homogène à l'intérieur de celui-ci. Cependant, peu après la pose sur le support 1, les pigments dont la densité est en général supérieure à celle du liant s'agglutinent de façon inhomogène au fond du liant, sur le support, comme le montre la figure 1a, dégradant considérablement l'effet esthétique recherché et l'efficacité de luminescence dans le cas notamment où les pigments 3 sont luminescents.

La figure 1b présente une couche de revêtement obtenue en saturant le liant 2 de pigments 3. Dans ce cas la répartition est effectivement homogène. Cette solution nécessite cependant de grandes quantités de pigments et est donc très couteuse, notamment dans le cas où les pigments sont luminescents. Par ailleurs les pigments proches de la surface 4, soumis à l'environnement extérieur sont facilement détériorés. De plus, dans le cas de contraintes mécaniques, exercées par exemple suivant la flèche 5, les pigments sont écrasés, et si ceux-ci sont luminescents, ils perdent alors cette propriété. Dans le cas d'un revêtement luminescent, la solution présentée par la figure 1b, toujours réalisée selon l'art antérieur, apporte des qualités esthétiques acceptables mais n'apporte aucune résistance, notamment mécanique et ne peut en aucun cas s'adapter à des revêtements de sol par exemple, particulièrement à des revêtements luminescents à cause de la très grande fragilité mécanique des pigments luminescents.

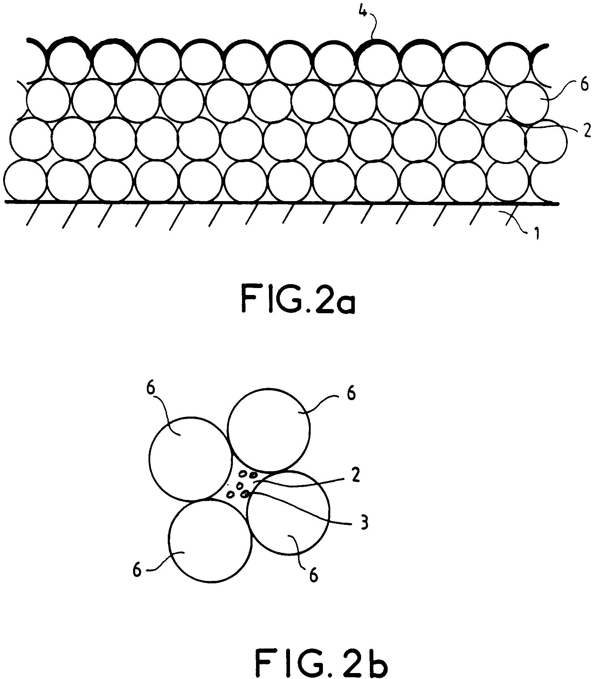

La figure 2a présente une vue en coupe d'un revêtement possible selon l'invention comportant des pigments. Des billes 6, translucides par exemple, chargent le liant 2 en quantité suffisante de manière à être jointives et réparties sur toute l'épaisseur du revêtement délimité par le support 1 et sa surface 4, comme le montre la figure 2a. La couche supérieure de billes 6 peut être éventuellement recouverte d'une légère couche de liant sans pour autant nuire à la qualité du revêtement. Les pigments 3 contenus dans le liant 2 sont ainsi emprisonnés entre les billes 6 comme le montre de façon détaillée la figure 2b. Sur cette figure, quatre billes 6 jointives contenues dans le liant 2 sont représentées. Des pigments 3 sont emprisonnés entre ces billes 6. Au moment du mélange entre le liant 2 à l'état fluide, les billes 6 et les pigments 3, ces derniers sont répartis de façon homogène dans le mélange et le restent après la pose de celui-ci, car leur emprisonnement entre les billes 6 les empêche de s'agglutiner sur le support 1. De plus, les billes 6, notamment si elles sont en verre, apportent une protection mécanique aux pigments, puisque ceux-ci sont compartimentés dans des espaces, entre les billes, soumis à aucune contrainte mécanique quel que soit l'environnement extérieur au produit obtenu selon l'invention. Cette dernière propriété est particulièrement importante dans le cas de pigments photoluminescents. L'efficacité du produit quant à ces qualités est d'autant mieux atteinte que les billes 6 sont en verre et polies, c'est-à-dire ayant une surface régulière permettant de bien rendre les billes jointives. La granulométrie des billes 6, plus particulièrement leur diamètre, doit aussi permettre une compartimentation satisfaisante des pigments. En effet, si le diamètre est trop faible, les pigments risquent d'être écrasés et si le diamètre est trop grand, les pigments risquent d'être mal retenus prisonniers entre les billes. Par exemple, pour des pigments ayant un diamètre compris entre 5 et 40 µm par exemple, des billes dont le diamètre est compris entre 200 et 300 µm permettent une bonne compartimentation des pigments. Les billes 6 n'ont pas nécessairement le même diamètre. Dans le cas de la figure 2a, quatre couches de billes constituent l'épaisseur du produit déposé. Ce nombre de couches est évidemment présenté à titre d'exemple, et dépend de l'épaisseur du revêtement. Pour des applications telles que des revêtements de sol ou de mur par exemple cette épaisseur peut atteindre plusieurs millimètres, voire un centimètre et plus.

Un des avantages supplémentaires apportés par le produit selon l'invention est que la quantité de liant qui est un produit organique, est grandement diminué au profit de la quantité de billes 6 ; or, si celles-ci sont en verre ou en silice par exemple, le produit sera en conséquence très peu inflammable. De plus, dans le cas de produit luminescent par exemple, la quantité de pigments luminescents nécessaire est réduite puisque ceux-ci sont répartis dans l'espace situé entre les billes 6 et de façon homogène sur toute la couche de produit, ce qui diminue grandement le coût du produit. Suivant les diamètres des billes, la proportion de celles-ci dans le mélange constituant le produit de revêtement peut dépasser 90%. Le liant peut être constitué par exemple d'une matière de base époxy et d'un durcisseur compatible. En fait, tous les types de liants connus de l'homme de l'art peuvent être utilisés, en fonction évidemment de la nature des pigments et des billes.

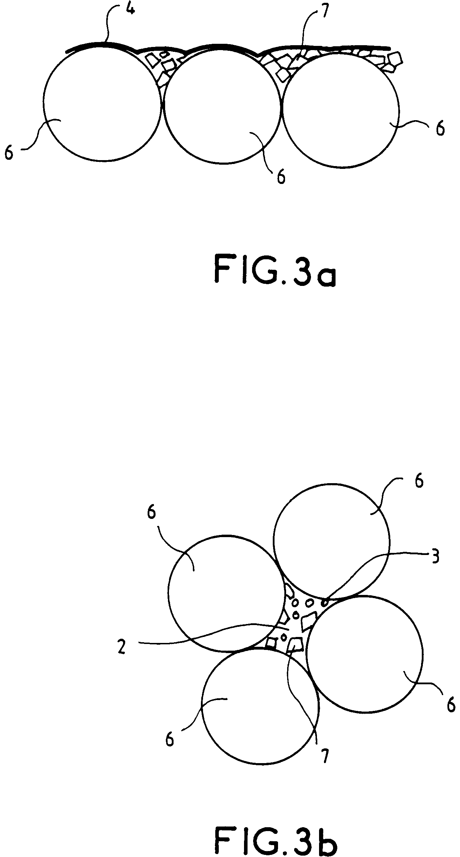

Le revêtement illustré par la figure 2a présente un état de surface 4 bosselé dû au fait qu'en durcissant, le liant épouse la forme des billes 6 en surface. Une solution pour supprimer cet effet consiste à ajouter au mélange constitué du liant 2, des billes de verre 6 et des pigments 3, des charges 7 beaucoup plus petites que les billes 6, des particules de verre broyé par exemple, comme l'illustre la figure 3a. Ces charges 7 comblent les creux de surface 4 de la figure 2a et permettent d'obtenir une surface lisse, n'accrochant pas la poussière par exemple. Les particules de verre broyé peuvent être remplacées éventuellement par de la poudre de quartz moins coûteuse. De la poudre de silice pourrait être utilisée, cependant, n'étant pas translucide, elle n'est pas adaptée aux revêtements luminescents notamment.

La figure 3b montre un autre avantage de ces charges supplémentaires 7. Elle permet en effet de diminuer la quantité de liant 2 entre les billes 6. Si ces charges sont des particules de verre broyé ou de quartz par exemple, elle rendent le revêtement encore plus résistant au feu. Le mélange obtenu avant la pose constitue dans ce cas une sorte de mortier sec, facile à poser.

Aux mélanges précédemment décrits, il est possible d'ajouter des agents bien connus de l'homme de l'art. Ces agents additifs peuvent être par exemple des agents mouillants, des agents de pontage, des agents antimoussants, des agents débulleurs, des agents plastifiants ou des agents filtrant les rayons ultra-violets. Les agents mouillants permettent en particulier aux pigments d'être convenablement mouillés par le liant et donc de bien se mélanger à celui-ci, les agents de pontage favorisent la liaison mécanique et chimique entre le liant et les pigments d'une part, et entre le liant et les billes d'autre part. Les agents antimoussants et les agents débulleurs suppriment les bulles d'air constituées lors du mélange des constituants du revêtement. Les agents mouillants et les agents de pontage participent également à la suppression de bulles d'air. Ces bulles d'air sont en effet très néfastes à la qualité du revêtement; soumises à des rayonnements de photons par exemple, elles libèrent de petites quantités d'eau qui noircissent le revêtement et lui font perdre tout effet luminescent dans le cas notamment de revêtements luminescents. Les agents plastifiants augmentent les propriétés élastiques du revêtement afin de le rendre plus souple et moins cassant. Enfin les agents filtrants les ultra-violets protègent les pigments de ces rayonnements si cela est nécessaire, en particulier quand ce rayonnement s'avère trop intense. Tous ces agents sont ajoutés en faible quantité et constituent des proportions généralement inférieures à 1 % environ du mélange total.

Les qualités esthétiques du revêtement selon l'invention comportant notamment des particules luminescentes peuvent être complétées en ajoutant par exemple aux mélanges précédemment décrits, des paillettes métalliques, de nacre, de la poudre de verre ou de quartz coloré.

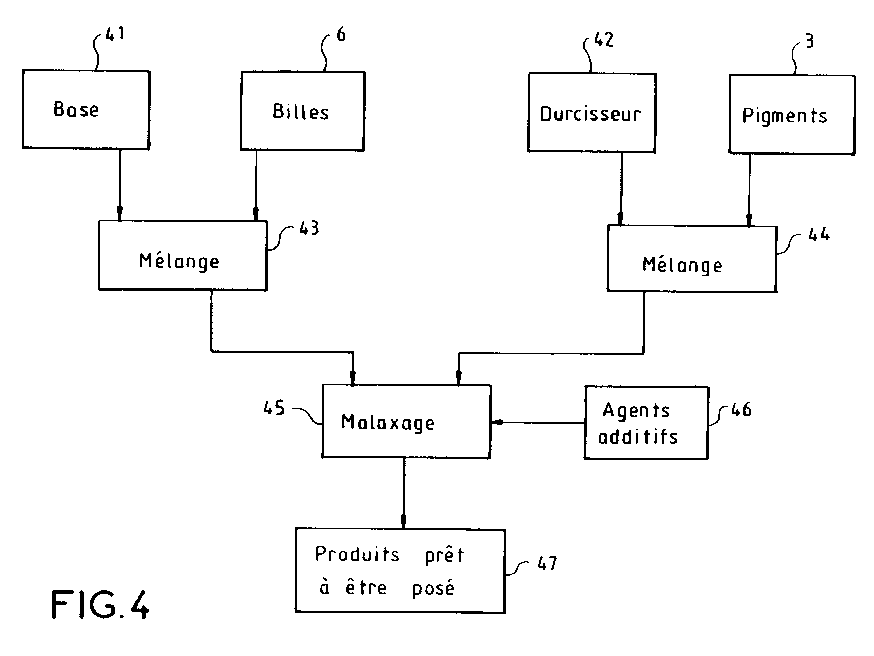

La figure 4 présente un procédé d'obtention possible d'un produit de revêtement selon l'invention. Une matière de base 41, appelée généralement base, de préférence en résine époxy, mais aussi par exemple en polyuréthanne ou en méthacrylate, est associée à des billes 6, en verre poli par exemple, pour obtenir un premier mélange 43. De même, un durcisseur 42, à base d'amine cycloaliphatique par exemple, est associé à des pigments 3, photoluminescents par exemple pour un deuxième mélange 44. Les deux mélanges obtenus 43 et 44 sont ensuite regroupés pour subir une phase de malaxage 45. Lors de cette phase de malaxage 45, des agents additifs 46 tels que ceux précédemment cités peuvent être ajoutés aux mélanges 43 et 44. Une fois la phase de malaxage 45 terminée, un produit de revêtement 47 selon l'invention est obtenu et prêt à être posé. Ce produit obtenu, encore fluide, est composé d'un liant constitué de la matière base 41 et du durcisseur 42, de billes 6 et de pigments 3 et éventuellement d'agents additifs. La polymérisation du liant dépendant de la nature du durcisseur, le revêtement selon l'invention se solidifiera plus ou moins rapidement. Les proportions des produits ainsi que le diamètre des billes doivent être tels qu'ils permettent d'obtenir les structures présentées par les figures 2a et 2b. Un exemple de composition de mélange est donné ci-dessous :

| | |
|---|---|
| - base | 19,70 % |
| - durcisseur | 9,20 % |
| - billes de verre de diamètre 200 à 300 µm | 59,00 % |
| - pigments photoluminescents de diamètre 5 à 40 µm | 11,80 % |
| - agents additifs | 0,30 % |

Les quantités de base et de durcisseur peuvent être par exemple diminuées au profit de quantités de particules de verre broyé ou de quartz comme dans l'exemple de composition ci-dessous :

| | |
|---|---|
| - base | 17,70 % |
| - durcisseur | 8,30 % |
| - billes de verre de diamètre 200 à 300 µm | 59,00 % |
| - pigments photoluminescents de diamètre 5 à 40 µm | 11,80 % |
| - verre broyé | 2,90 % |
| - agents additifs | 0,30 % |

Ces proportions dépendent bien évidemment du type d'application. Les produits de revêtement obtenus selon l'invention, très résistants mécaniquement et aux qualités esthétiques remarquables, peuvent être posés sur toutes sortes de surface, suivant plusieurs épaisseurs possibles. Le revêtement peut être recouvert d'un vernis ou d'un produit antidérapant par exemple, notamment dans le cas de revêtement de sol. Ces produits peuvent éventuellement durcir avant la pose de manière à obtenir par exemple des carreaux ou des plinthes. Des moules peuvent par ailleurs être recouverts d'un revêtement selon l'invention pour obtenir des objets tels que des vases ou des récipients par exemple.

## Revendications

1. Matériau comportant des pigments, ayant une épaisseur donnée et étant constitué au moins d'un liant (2), de billes (6) et de pigments (3), caractérisé en ce que les billes (6) sont jointives à l'intérieur du revêtement et réparties sensiblement sur toute son épaisseur, les pigments (3) étant contenus dans le liant (2) entre les billes (6).

2. Matériau selon la revendication 1, caractérisé en ce que les billes (6) sont translucides.

3. Matériau selon les revendications 1 et 2, caractérisé en ce que les billes (6) sont en verre.

4. Matériau selon l'une quelconque des revendications précédentes, caractérisé en ce que les pigments (3) sont luminescents.

5. Matériau selon l'une quelconque des revendications précédentes, caractérisé en ce que les pigments (3) sont photoluminescents.

6. Matériau selon l'une quelconque des revendications précédentes, caractérisé en que les billes (6) sont pleines.

7. Matériau selon l'une quelconque des revendications précédentes, caractérisé en ce que les billes (6) ont un diamètre relatif par rapport à la taille des pigments (3) telles qu'elles n'écrasent pas les pigments (3).

8. Matériau selon la revendication 7, caractérisé en ce que les billes (6) ont un diamètre compris entre 200 µm et 300 µm.

9. Matériau selon l'une quelconque des revendications précédentes, caractérisé en ce qu'il contient en outre des particules (7) de verre broyé.

10. Matériau selon l'une quelconque des revendications précédentes, caractérisé en ce qu'il contient en outre des particules (7) de quartz.

11. Matériau selon l'une quelconque des revendications précédentes, caractérisé en ce qu'il contient en outre un agent mouillant (46).

12. Matériau selon l'une quelconque des revendications précédentes, caractérisé en ce qu'il contient en outre un agent de pontage (46).

13. Matériau selon l'une quelconque des revendications précédentes, caractérisé en ce qu'il contient en outre un agent débulleur (46)

14. Matériau selon l'une quelconque des revendications précédentes, caractérisé en ce qu'il contient en outre un agent plastifiant (46).

15. Matériau selon l'une quelconque des revendications précédentes, caractérisé en ce qu'il contient un agent filtrant (46) les rayons ultra-violets.

16. Matériau selon les revendications 1, 2, 3, 4, 5, 6, 7, 10, 11, 12, 13, 14 et 15, caractérisé en ce que la composition du mélange contient :
| | |
|---|---|
| - base (41) | 19,70 % |
| - durcisseur (42) | 9,20 % |
| - billes (6) de verre de diamètre 200 à 300 µm | 59,00 % |
| - pigments (3) photoluminescents | 11,80 % |
| - agents additifs (46) | 0,30 % |

17. Matériau selon l'une quelconque des revendications 1, 2, 3, 4, 5, 6, 7, 8, 9, 10, 11, 12, 13, 14 et 15, caractérisé en ce que la composition du mélange contient :
| | |
|---|---|
| - base (41) | 17,70 % |
| - durcisseur (42) | 8,30 % |
| - billes (6) de verre de diamètre 200 à 300 µm | 59,00 % |
| - pigments (3) photoluminescents | 11,80 % |
| - verre broyé (7) | 2,90 % |
| - agents additifs (46) | 0,30 % |

18. Procédé pour l'obtention du revêtement selon l'une quelconque des revendications précédentes, caractérisé en ce qu'il consiste à associer une base (41) à des billes (6) pour obtenir un premier mélange (43), à associer un durcisseur (42) et des pigments (3) pour obtenir un deuxième mélange (44), à regrouper les deux mélanges (43, 44) obtenus dans une phase de malaxage (45), des agents additifs (46) étant ajoutés aux mélanges (43, 44) lors de la phase de malaxage, pour obtenir un produit (47) de revêtement prêt à être posé.
